(19) Europäisches Patentamt
European Patent Office
Office européen des brevets

(11) Veröffentlichungsnummer : **0 071 862**
**B1**

(12) # EUROPÄISCHE PATENTSCHRIFT

(45) Veröffentlichungstag der Patentschrift : **30.10.85**

(51) Int. Cl.[4] : **H 01 B 1/12**

(21) Anmeldenummer : **82106729.5**

(22) Anmeldetag : **26.07.82**

(54) **Polystyrol mit hoher elektrischer Leitfähigkeit.**

(30) Priorität : **07.08.81 DE 3131251**

(43) Veröffentlichungstag der Anmeldung : **16.02.83 Patentblatt 83/07**

(45) Bekanntmachung des Hinweises auf die Patenterteilung : **30.10.85 Patentblatt 85/44**

(84) Benannte Vertragsstaaten : **CH DE FR GB LI**

(56) Entgegenhaltungen :
**DE-A- 1 544 976**
**FR-A- 1 445 213**
**CHEMICAL ABSTRACTS, Band 84, Nr. 12, 22. März 1976, Seite 38, Nr. 75110d, Columbus, Ohio, USA**
**POLYMER JOURNAL, Band 11, Nr. 5, 1979, Seiten 371-375, Tokyo, JP. S. IKENO et al.: "Studies on polymers having high dielectric constants. IX. Blend polymers consisting of highly conducting monomeric-TCNQ salts and insulating polymers"**

(73) Patentinhaber : **BAYER AG**
**Konzernverwaltung RP Patentabteilung**
**D-5090 Leverkusen 1 Bayerwerk (DE)**

(72) Erfinder : **Broich, Bruno, Dr.**
**Forschungszentrum KLR-F 1 Fa.Brown Bovarie**
**CH-5405 Baden-Dättwil (CH)**
Erfinder : **Hocker, Jürgen, Dr.**
**Eichenweg 6**
**D-5060 Bergisch-Gladbach 2 (DE)**
Erfinder : **Müller, Hans-Klaus, Dr.**
**August-Kierspel-Strasse 149**
**D-5060 Bergisch-Gladbach 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Homo- und Copolymerisate des Styrols, sowie polymerisiertes Styrol enthaltende Polymergemische mit hoher elektrischer Leitfähigkeit und Formteile bzw. Folien und Überzüge aus diesem Material. Synthetische thermoplastische Polymere sind im allgemeinen gute elektrische Isolatoren mit spezifischen elektrischen Leitfähigkeiten kleiner als $10^{-14}$ (Ohm × cm)$^{-1}$. Bei Kunststoffen kann es daher zu starken elektrostatischen Aufladungen kommen, die für viele Anwendungsbereiche unbedingt vermieden werden müssen. Dies trifft insbesondere für jene Bereiche zu, in denen explosive Gas- oder Staub-Gas-Gemische durch Funkenentladung gezündet werden können.

Um thermoplastische Kunststoffe antistatisch auszurüsten, ist eine große Zahl von Antistatikzusätzen entwickelt worden. Diese Zusätze werden beispielsweise auf die Oberfläche von Kunststoffteilen aufgebracht. In der Regel verlieren sie aber nach kurzer Zeit ihre Wirksamkeit. Man hat auch Antistatikzusätze in die Kunststoffe eingearbeitet. Häufig verschlechtern sich dann die Eigenschaften des Kunststoffes oder die Zusätze diffundieren aus. Die Antistatikzusätze verleihen der Kunststoffoberfläche eine gewisse Hydrophilie, so daß sich ein Wasserfilm an der Oberfläche bilden kann, der die Aufladung verhindert. Um Kunststoffe antistatisch zu machen, bedarf es mindestens einer spezifischen Leitfähigkeit in der Größenordnung von $10^{-11}$ bis $10^{-10}$ (Ohm × cm)$^{-1}$ oder eines Oberflächenwiderstandes von max. $10^9$ bis $10^{10}$ Ohm.

Daneben gibt es eine Fülle von Anwendungen für elektrisch leitfähige Kunststoffe im Bereich der Elektrotechnik bzw. Elektronik. So werden z. B. in zunehmendem Maße polymere Werkstoffe gebraucht, die in der Lage sind, elektromagnetische Felder abzuschirmen. Daneben finden leitfähige Polymere Anwendung als aktive bzw. passive Systemkompenenten. Natürlich richtet sich hier die Anwendung nach der Höhe der erzielten Leitfähigkeit. Hierbei kommt es darauf an, das übrige Eigenschaftsbild der Thermoplasten nicht nachteilig zu verändern.

Um Thermoplaste elektrisch leitfähig zu machen, hat man versucht, anorganische, elektrisch leitende Substanzen, z. B. Metalle, Metalloxide, Metallsulfide, Ruß oder Graphit einzuarbeiten. Diese Zusätze vertragen sich aber mit den organischen Polymeren sehr schlecht. Um praktisch verwendbare Leitfähigkeiten zu erzielen, ist die erforderliche Menge, meist 10 bis 30 Gew.-%, bezogen auf den Kunststoff, so groß, daß die mechanischen Eigenschaften entscheidend verschlechtert werden. Neben diesen konventionellen Verfahren besteht die Möglichkeit, Polymere durch Zusatz von Charge-Transfer-Komplexen (CT-Komplexen) elektrisch leitend zu machen. Kristalline CT-Komplexe gehören mit zu den besten organischen Leitern. Kristalle bestimmter CT-Komplexe besitzen sogar metallische Leitfähigkeit. Organische Komplex-Salze auf Basis des 7,7,8,8-Tetracyanochinodimethan, nachstehend als TCNQ bezeichnet, sind besonders gut leitende CT-Komplexe.

Durch Zusatz von CT-Komplexen zu Polymeren läßt sich deren elektrische Leitfähigkeit zum Teil beträchtlich erhöhen. Hierbei ist der Grad der erzielten Leitfähigkeit primär abhängig von der Konzentration des im Polymeren eingearbeiteten CT-Komplexes. Zur Erzielung sehr hoher Leitfähigkeiten bis in den halbleitenden Bereich ($10^{-6}$ bis $10^{-3}$ (Ohm × cm)$^{-1}$) sind, ähnlich wie bei den konventionellen Methoden, zum Teil erhebliche Zusätze an CT-Komplexen erforderlich, die zwischen 8 und 20 Gew.-% liegen können. Dies sind verhältnismäßig hohe Konzentrationen, die das Eigenschaftsbild von Kunststoffen derart verschlechtern, daß eine praktische Nutzanwendung nicht mehr möglich ist.

Es ist bekannt, Polymere durch Zusatz von im Polymeren löslichen CT-Komplexen elektrisch leitend zu machen. Dies ist beschrieben für stickstoffhaltige Polymere wie Polyurethan oder Polymere des Acrylnitrils, Methacrylnitrils oder Vinylpyridins (vergl. DE-AS 1 544 976 oder FR-PS 1 445 213). In diesen Patenten ist beschrieben, daß nach Lösung von 2 bis 5 % eines Chinolinsalzes des TCNQ in diesen Polymersystemen ihre spezifische elektrische Leitfähigkeit $10^{-5}$ bis $10^{-3}$ (Ohm × cm)$^{-1}$ betragen kann.

Es sind auch andere Polymersysteme mit molekularen Lösungen von CT-Komplexen beschrieben, allerdings sind die erzielten Leitfähigkeitswerte vergleichsweise gering (vergl. M. Kryszewski e. a., Organic Coatings and Plastics. Chemistry *38* (1978) S. 323). Da die Löslichkeit von CT-Komplexen in den meisten technisch verwendbaren Polymeren nur gering ist, führt diese Methode im allgemeinen nicht zum Erfolg.

Allgemein ist bekannt, daß in Polymeren immer ein gewisser Grad an elektrischer Leitfähigkeit erzielt werden kann, wenn man genügend hohe Konzentrationen mikrokristalliner CT-Komplexe in die Polymermatrix eindispergiert. Die erforderlichen Konzentrationen sind in der Regel so groß, daß wegen des insgesamt verschlechterten Eigenschaftsbildes eine praktische Nutzanwendung entfällt.

So läßt sich z. B. auch die elektrische Leitfähigkeit von Polystyrol durch Zusatz von CT-Komplexen erhöhen (vergl. Ikeno e. a., Polymer J. *11* (1979) 5, S. 371). In dieser Arbeit ist beschrieben, daß beispielsweise durch Zusatz von 9,3 % eines Chinolinsalzes des TCNQ zum Polystyrol eine spezifische Leitfähigkeit von ca. $10^{-5}$ (Ohm × cm)$^{-1}$ erreicht wird. Das TCNQ-Salz ist in der isolierenden Polymermatrix in Form kleiner nadel- bzw. faserähnlicher Kristalle mit einer Länge von einigen µm mikroskopisch fein dispergiert.

Es ist auch bekannt, daß in speziellen Bisphenol-A-Polycarbonaten durch mikrokristalline Ausscheidungen eines Charge-Transfer-Komplexes aus Tetracyanochinodimethan (TCNQ) und Tetrathiatetracen

(TTT) die Leitfähigkeit des Polycarbonates schon bei Konzentrationen von 1 bis 2 Gew.-% beträchtlich erhöht wird (M. Kryszewski e. a., Nature *289*, 1981, S. 390). Tetrathiatetracen ist jedoch eine schwer zugängliche Donatorkomponente.

Entgegen allen bisher gemachten Erfahrungen wurde nun gefunden, daß mit anderen als bisher beschriebenen Verfahren sich die elektrische Leitfähigkeit von Polystyrol durch vergleichsweise geringe Zusätze sehr leicht zugänglicher Charge-Transfer-Komplexe um bis 14 Größenordnungen erhöhen läßt.

Reines Polystyrol ist ein guter Isolator mit einer spezifischen Leitfähigkeit von ca. $10^{-16}$ $(Ohm \times cm)^{-1}$.

Durch Zusatz von CT-Komplexen in Konzentrationen von 1 Gew.-% kann man in Polystyrol spezifische Leitfähigkeiten in der Größenordnung von $10^{-3}$ bis $10^{-2}$ $(Ohm \times cm)^{-1}$ erzielen.

Nach allen bisherigen Erfahrungen ist es überraschend, daß man in Polystyrol mit diesen geringen Konzentrationen an CT-Komplex derartig hohe elektrische Leitfähigkeiten erzielen kann.

Ziel der Erfindung ist somit, in an sich sehr gut isolierenden Homo- bzw. Copolymerisaten des Styrols durch Zusatz vergleichsweise geringer Mengen an CT-Komplex, die das übrige Eigenschaftsbild des Polymerisates nicht nachteilig verändern, durch spezielle Verfahren hohe elektrische Leitfähigkeiten zu erhalten.

Dabei ist der CT-Komplex nicht, wie bislang beschrieben, mehr oder weniger gleichförmig im Polystyrol verteilt, sondern er scheidet sich erfindungsgemäß kristallin in Form langer, dünner Fasern aus. Diese faserförmigen Kristalle fügen sich in der Polymermatrix zu einem dreidimensionalen Netzwerk von Leiterbahnen zusammen.

Zur Einarbeitung der CT-Komplexe löst man im allgemeinen Polystyrol in einem geeigneten Lösungsmittel auf und fügt den CT-Komplex z. B. als kristallines Pulver zu, rührt, gegebenenfalls bei erhöhter Temperatur, bis zur klaren Lösung oder fügt eine Lösung des CT-Komplexes (in der Regel in einem anderen Lösungsmittel) der Polymerlösung zu und verdampft anschließend das Lösungsmittel bzw. das Lösungsmittelgemisch. Verdampfungsgeschwindigkeit und -temperatur sind hierbei so zu steuern, daß die für die elektrische Leitfähigkeit besonders günstige Faserstruktur entsteht.

Das Verhältnis von Länge zu Durchmesser ist für Fasern aus dem bevorzugtem CT-Komplex II in Polystyrol besonders groß und kann mehr als 1 000 betragen. Es kann sich jedoch auch, und dies ist besonders bevorzugt, unter Verknüpfung der Kristalle ein dreidimensionales Netzwerk bilden. Die Fasern bilden sich aus der Lösung des Polystyrols, während das Lösungsmittel entfernt wird.

Die nadel- bzw. faserförmigen Kristalle der Charge-Transfer-Komplexe haben vorzugsweise Durchmesser von 1 bis 10 µm und eine Länge von 40 bis über 2 000 µm, wobei eine Faserlänge von über 1 000 µm überwiegt.

Erfindungsgemäß kann man die Lösung des Polymeren mit einer Lösung des Charge-Transfer-Komplexes mischen. Das Lösungsmittel kann bei Temperaturen bis zu 150 °C entfernt werden, vorzugsweise bei 80° bis 120 °C, unter vermindertem Druck, so daß die für die hohe Leitfähigkeit besonders günstige Faserstruktur entsteht. In einem besonders bevorzugten Verfahren zur Herstellung leitfähiger Folien fügt man den CT-Komplex bzw. dessen Lösung einer 60° bis 100 °C, bevorzugt 80 °C heißen Polymerlösung zu und gießt das Gemisch auf eine 60 °C heiße Platte, so daß der CT-Komplex homogen über die ganze Dicke der Polymerschicht faserförmig auskristallisiert.

Zur Herstellung besonders feiner nadel- bzw. faserförmiger Kristalle kann man auch zur Lösung des Polymeren eine Lösung des Akzeptors und anschließend, ggfs. bei erhöhter Temperatur, eine Lösung des Donators zufügen und so den Charge-Transfer-Komplex in situ zu erzeugen.

Gegenstand der Erfindung ist kristalline Charge-Transfer-Komplexe der Formel I enthaltendes Polystyrol, in dem die Charge-Transfer-Komplexe in Form faser- oder nadelförmiger Kristalle mit einem Verhältnis von Kristalldurchmesser zu Kristallänge von 1 : 20 bis 1 : 2 000, bevorzugt 1 : 200 bis 1 : 2 000 im Polymeren enthalten sind und ein zusammenhängendes Geflecht elektrisch leitfähiger Bahnen bilden, so daß die spez. Leitfähigkeit ca. $10^{-5}$ bis $10^{-2}$ $(Ohm \times cm)^{-1}$ beträgt, wobei der Gehalt an Charge-Transfer-Komplex, bezogen auf das Polymere, 0,8-1,6 Gew.-%, bevorzugt 1 Gew.-% beträgt. Dabei wird das übrige Eigenschaftsbild des Kunststoffes möglichst wenig verändert.

Gegenstand der Erfindung ist auch ein Verfahren zur Herstellung von Charge-Transfer-Komplexen enthaltendem Polystyrol, das dadurch gekennzeichnet ist, daß man zu einer Polystyrollösung den Charge-Transfer-Komplex zufügt und das Lösungsmittel entfernt. Man kann auch statt des Komplexes eine Lösung des Donators und des Akzeptors nacheinander in beliebiger Reihenfolge zufügen und den Komplex so in situ bilden. Polystyrol im Sinne der Erfindung bedeutet das Homopolymerisat des Styrols sowie auch Copolymere des Styrols als auch Polystyrol enthaltende Polymermischungen und -legierungen.

Unter Polystyrol im Sinne der Erfindung ist bevorzugt Styrol-Homopolymerisat zu verstehen. Es sind aber auch Styrol-Copolymerisate mit thermoplastischem Charakter und Polymergemische mit einpolymerisiertem Styrol geeignet.

Styrol-Copolymerisate sind insbesondere Styrol-Acrylnitril-Copolymerisate und Styrol-Butadien-Copolymerisate mit thermoplastischem Charakter. Styrol enthaltende Polymerisate sind insbesondere schlagfeste Polystyrole (Pfropfpolymerisate von Styrol auf Polybutadien) und ABS-Polymerisate, d. h. Zweiphasenkunststoffe, in denen ein thermoplastisches Harz als konstante Phase mit einem durch Pfropfen modifizierter Kautschuk als disperse Phase vereinigt ist. Beide Komponenten enthalten Styrol.

Beispiel für das Harz ist Styrol-Acrylnitril-Copolymerisat, für den Kautschuk ein Pfropfpolymerisat von Styrol und Acrylnitril auf einen Dienkautschuk von Polybutadien.

Charge-Transfer-Komplexe im Sinne der Erfindung lassen sich durch die Formel I

$$DA_n \qquad (I)$$

beschreiben, in der

D einen Elektronendonator,

A einen Elektronenakzeptor, und

n eine Zahl von 1 bis 5, vorzugsweise 2,

bedeuten.

Charge-Transfer-Komplexe sind an sich bekannt. Bevorzugt werden im Rahmen der Erfindung solche CT-Komplexe, deren Donatoranteil leicht zugänglich ist und sich von einer organischen Stickstoff und/oder Sauerstoff und/oder Schwefel enthaltenden Verbindung ableitet und als Kation vorliegt. Beispiele hierfür sind die Kationen der folgenden Verbindungen :

Triethylamin, Diethylcyclohexylamin, Chinolin, Benzo-2,3-chinolin, o-Phenanthrolin, Benzthiazol, N-Methylbenzimidazol, Pyridin, 2,2'-Di-pyridin, 4,4'-Dipyridin, 4,5-Dimethylthiazolin, 1-Phenylimidazolidin, Bis-[1,3-diphenyl-imidazolidinyliden-(2)], Bis-[3-methyl-benz-thiazolinyliden-(2)].

Bevorzugte Elektronenakzeptorkomponenten sind organische Polycyan- bzw. Polynitroverbindungen, beispielsweise Tetracyanethylen, Tetracyanochinodimethan, Trinitrofluoren, Naphthalintetracarbonsäuredianhydrid und Iod. Außer dem Donatorkation und den Akzeptoranionen können die Charge-Transfer-Komplexe noch neutrale Akzeptormoleküle enthalten. Im allgemeinen sind bis zu vier solcher Moleküle vorhanden.

Besonders bevorzugt ist die Verwendung der Charge-Transfer-Komplexe II und III :

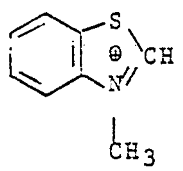 . TCNQ$^{\cdot\ominus}$ . TCNQ (II)

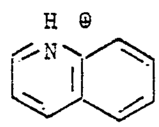 . TCNQ$^{\cdot\ominus}$ . TCNQ (III)

TCNQ = Tetracyanochinodimethan.

## Beispiele

### Beispiel 1

Zu einer 80 °C heißen, 20 %igen Lösung eines Polystyrols der Molmasse 290.000 in Dimethylformamid wird 1 %, bezogen auf das eingesetzte Polystyrol, eines pulverigen, mikrokristallinen Charge-Transfer-Komplexes der Formel II

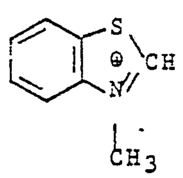 . TCNQ$^{\cdot\ominus}$ . TCNQ (II)

hinzugefügt. Der CT-Komplex wird vollständig in der Polymerlösung gelöst. Die grün gefärbte, heiße Lösung wird bei Raumtemperatur auf einer Glasplatte zu einem Film ausgezogen und anschließend bei 120 °C getrocknet. Man erhält eine grünliche Folie, die den Charge-Transfer-Komplex II in Form kristalliner Fasern enthält. Die Fasern besitzen Durchmesser von 1-4 µm und sind im Mittel 1 bis 2 mm lang. Die Fasern sind im Polymerfilm netzartig miteinander verbunden. Die spezifische Leitfähigkeit der Folie beträgt $2 \cdot 10^{-3}$ (Ohm × cm)$^{-1}$.

Die Werte der folgenden Tabelle geben die Abhängkeit der spez. Leitfähigkeit σ von der Konzentration des CT-Komplexes im Polymeren wieder :

| Gew.-% | $\sigma$ (Ohm × cm)$^{-1}$ |
|---|---|
| 0 | $10^{-14}$ |
| 0,1 | $6.10^{-13}$ |
| 0,2 | $8.10^{-13}$ |
| 0,5 | $1.10^{-12}$ |
| 0,7 | $5.10^{-10}$ |
| 0,8 | $8.10^{-4}$ |
| 1 | $1.10^{-3}$ |
| 2 | $5.10^{-3}$ |
| 4 | $8.10^{-3}$ |

Beispiel 2

Zu einer 80 °C heißen, 20 %igen Lösung eines Polystyrols der Molmasse 290.000 in Dimethylformamid wird 1 %, bezogen auf das eingesetzte Polystyrol, eines pulverigen, mikrokristallinen Charge-Transfer-Komplexes der Formel III

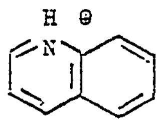 . TCNQ $^{.\ominus}$ . TCNQ (III)

hinzugefügt. Der CT-Komplex wird vollsändig in der Polymerlösung gelöst. Die grün gefärbte, heiße Lösung wird bei Raumtemperatur auf einer Glasplatte zu einem Film ausgezogen und anschließend bei 120 °C getrocknet. Man erhält eine grünliche Folie, die den Charge-Transfer-Komplex III in Form kristalliner Fasern enthält. Die Fasern besitzen Durchmesser von 1-4 µm und sind im Mittel 1-2 mm lang. Die Fasern sind im Polymerfilm netzartig miteinander verbunden. Die spez. Leitfähigkeit der Folie beträgt $2 \cdot 10^{-3}$ (Ohm · cm)$^{-1}$.

Beispiel 3

Zu 100 g einer 80 °C heißen, 20 %igen Lösung von Polystyrol (Molmasse 290.000) in Xylol wird eine Lösung von 0,2 g des Charge-Transfer-Komplexes der Formel II

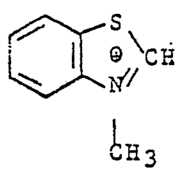 . TCNQ $^{.\ominus}$ . TCNQ (II)

in 27 g Acetonitril gegeben. Das grünlich gefärbte, heiße Lösungsgemisch wird auf einer Glasplatte bei Raumtemperatur zu einem Film ausgezogen und bei 120 °C getrocknet. Man erhält eine grünliche Folie mit nadelförmigen Ausscheidungen des CT-Komplexes II. Die Kristallnadeln berühren einander und sind ohne Vorzugsorientierung in der Folie verteilt. Die spez. Leitfähigkeit beträgt $2 \cdot 10^{-4}$ (Ohm · cm)$^{-1}$.

Beispiel 4

Zu 100 g einer 80 °C heißen, 20 %igen Lösung von Polystyrol (Molmasse 290.000) in o-Dichlorbenzol wird eine Lösung von 0,2 g des Charge-Transfer-Komplexes der Formel II

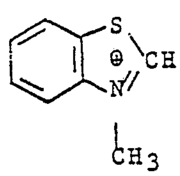 . TCNQ $^{.\ominus}$ . TCNQ (II)

in 27 g Acetonitril gegeben. Die grün gefärbte heiße Lösung wird auf einer Glasplatte bei Raumtemperatur zu einem Film ausgezogen und bei 120 °C getrocknet. Man erhält eine grünliche Folie mit faserförmigen, zu Büscheln (Garben) zusammengefaßten Ausscheidungen des CT-Komplexes II. Die spez. Leitfähigkeit beträgt $\sigma = 2 \cdot 10^{-3}$ (Ohm · cm)$^{-1}$.

Styrol-Acrylnitril-Folien

Beispiel 5

Zu 100 g einer 20 %igen Lösung eines Styrol-Acrylnitril-Copolymerisates in o-Dichlorbenzol wird eine Lösung von 0,83 g des CT-Komplexes der Formel II in 20 g Dimethylformamid gegeben. (Dies entspricht 4 Gew.-% CT-Komplex, bezogen auf das eingesetzte Copolymer). Man erhält eine grün gefärbte Lösung, die bei Raumtemperatur auf einer Glasplatte zu einem Film ausgezogen wird. Nach dem Trocknen bei 120 °C erhält man eine grünliche Folie mit faserförmigen Ausscheidungen des CT-Komplexes II, die sich sphärolithartig anordnen. Die spez. Leitfähigkeit der Folie beträgt $4 \cdot 10^{-4}$ (Ohm · cm)$^{-1}$.

Beispiel 6

Zu 100 g einer 80 °C heißen Lösung eines Styrol-Acrylnitril-Copolymerisates in o-Dichlorbenzol wird eine Lösung von 0,62 g des CT-Complexes II in 34 g Acetonitril gegeben (dies entspricht 3 Gew.-% CT-Komplex, bezogen auf das eingesetzte SAN-Copolymerisat). Die grün gefärbte Lösung wird bei Raumtemperatur auf einer Glaspatte zu einem Film ausgezogen und bei 120 °C getrocknet. Man erhält eine grünliche Folie mit nadel- bzw. faserförmigen Ausscheidungen, die sich zu Büscheln zusammenfügen. Die spez. Leitfähigkeit der Folie beträgt $1 \cdot 10^{-4}$ (Ohm · cm)$^{-1}$.

**Patentansprüche**

1. Kristalline Charge-Transfer-Komplexe der allgemeinen Formel I

$$DA_n \qquad (I)$$

enthaltendes elektrisch leitfähiges Polystyrol, Styrol-Copolymerisat oder polymerisiertes Styrol enthaltendes Polymerengemisch, worin D einen leicht zugänglichen Elektronendonator, A einen Elektronenakzeptor, und n eine Zahl von 1-5 bedeuten, und die Charge-Transfer-Komplexe in Form faser- bzw. nadelförmiger Kristalle im Polymeren enthalten sind, dadurch gekennzeichnet, daß die Kristalle ein Verhältnis von Kristalldurchmesser zu Kristallänge von 1 : 20 bis 1 : 2 000 haben und ein zusammenhängendes Geflecht elektrisch leitfähiger Bahnen bilden, so daß die spez. Leitfähigkeit ca. $10^{-5}$ bis $10^{-2}$ (Ohm × cm)$^{-1}$ beträgt, wobei der Gehalt an Charge-Transfer-Komplex, bezogen auf das Polymere, 0,8-1,6 Gew.-%, bevorzugt 1 Gew.-%, beträgt.

2. Verfahren zur Herstellung von hochleitfähigem, kristalline faserförmige Charge-Transfer-Komplexe enthaltendem Polystyrol, Styrol-Copolymerisat oder polymerisiertes Styrol enthaltendem Polymerengemisch, dadurch gekennzeichnet, daß man zu einer Lösung des Polymers den Charge-Transfer-Komplex in Form eines Pulvers zufügt und löst, oder eine Lösung des Charge-Transfer-Komplexes, in der Regel in einem anderen Lösungsmittel, der Polymerlösung zufügt und anschließend das Lösungsmittel bzw. -gemisch wieder entfernt, wobei die Temperatur zwischen 80 °C und 120 °C liegt, so daß der insitu gebildete kristalline Charge-Transfer-Komplex in der nach Anspruch 1 beschriebenen Form im Polymeren enthalten ist.

3. Verfahren nach Anspruch 2, dadurch gekennzeichnet, daß man nacheinander eine Lösung des Donators bzw. eines Donatorsalzes in einem geeigneten Lösungsmittel und anschließend eine Lösung des Akzeptors bzw. eines Akzeptorsalzes in dieser oder in umgekehrter Reihenfolge der Polymerlösung zufügt und durch Entfernen nach Anspruch 2 des Lösungsmittels den Charge-Transfer-Komplex im Polystyrol erzeugt.

**Claims**

1. An electrically conductive polystyrene, styrene copolymer or polymer mixture containing polymerised styrene, which contains crystalline charge transfer complexes of the general formula I

$$DA_n \qquad (I)$$

wherein D denotes a readily accessible electron donor, A denotes anelectron acceptor, and n denotes a number from 1-5 and the charge transfer complexes are contained in the polymer in the form of fibrous or needle-shaped crystals, characterised in that the crystals have a ratio of crystal diameter to crystal length of 1 : 20 to 1 : 2 000 and form a continuous network of electrically conductive pathways so that the spec. conductivity is about $10^{-5}$ to $10^{-2}$ (Ohm × cm)$^{-1}$, the content of charge transfer complex, based on the polymer, being 0.8-1.6 % by weight, preferably 1 % by weight.

2. Process for the production of a highly conductive polystyrene, styrene copolymer or polymer mixture containing polymerised styrene, which contains crystalline fibrous charge transfer complexes,

characterised in that the charge transfer complex is added in the form of a powder to a solution of the polymer and dissolved therein, or a solution of the charge transfer complex, generally in a different solvent, is added to the polymer solution and then the solvent or solvent mixture is removed again, during which the temperature is between 80° and 120 °C, so that the crystalline charge transfer complex formed in situ is contained in the polymer in the form described according to Claim 1.

3. Process according to Claim 2, characterised in that a solution of the donor or of a donor salt in a suitable solvent and then a solution of the acceptor or of an acceptor salt are added one after the other, in this or reverse order, to the polymer solution and the charge transfer complex is produced in the polystyrene by removing the solvent according to Claim 2.

**Revendications**

1. Polystyrène, copolymère du styrène ou mélange de polymères contenant du styrène polymérisé, contenant des complexes à transfert de charges cristallisés de formule générale I

$$DA_n \qquad (I)$$

dans laquelle D représente un donateur d'électrons facile à obtenir, A représente un accepteur d'électrons et n est un nombre de 1 à 5, et les complexes à transfert de charges sont contenus dans le polymère à l'état de cristaux en forme de fibres ou d'aiguilles, caractérisé en ce que les cristaux ont un rapport diamètre de cristal/longueur de cristal de 1 : 20 à 1 : 2 000 et forment un réseau cohérent de chemins conducteurs de l'électricité, de sorte que la conductivité spécifique est d'environ $10^{-5}$ à $10^{-2}$ $(ohm \times cm)^{-1}$, la teneur en le complexe à transfert de charges, par rapport au polymère, étant de 0,8 à 1,6 % en poids, de préférence de 1 % en poids.

2. Procédé de préparation de polystyrène, copolymère du styrène ou mélange de polymères contenant du styrène polymérisé, à haute conductivité, contenant des complexes à transfert de charges cristallisés en forme de fibres, caractérisé en ce que l'on ajoute le complexe à transfert de charges à l'état de poudre à une solution du polymère et on le dissout ou bien on ajoute une solution du complexe à transfert de charges, en général dans un autre solvant, à la solution du polymère puis on élimine le solvant ou le mélange de solvants, la température étant de 80 à 120 °C, de sorte que le complexe à transfert de charges cristallisé ainsi formé in situ est contenu dans le polymère sous la forme décrite dans la revendication 1.

3. Procédé selon la revendication 2, caractérisé en ce que l'on ajoute successivement à la solution du polymère une solution du donateur ou d'un sel du donateur dans un solvant approprié et ensuite une solution de l'accepteur ou d'un sel de l'accepteur, dans cet ordre ou dans l'ordre inverse, et l'on produit le complexe à transfert de charges dans le polystyrène par élimination du solvant selon la revendication 2.